# EUROPÄISCHE PATENTSCHRIFT

(11) **EP 1 027 246 B1**
(45) Veröffentlichungstag und Bekanntmachung des Hinweises auf die Patenterteilung: **08.05.2002**
(21) Anmeldenummer: 98959779.4
(22) Anmeldetag: 28.10.1998
(51) Int. Cl.: B62D 1/19, B60T 7/06, B60R 21/09

(54) **INSASSEN-SICHERHEITSVORRICHTUNG FÜR DIE FAHRERSEITE EINES KRAFTFAHRZEUGES**
OCCUPANT PROTECTION DEVICE FOR THE DRIVER'S SEAT OF A MOTOR VEHICLE
DISPOSITIF DE PROTECTION POUR LE SIEGE CONDUCTEUR D'UN VEHICULE AUTOMOBILE

(30) Priorität: 05.11.1997 DE 19749970
(43) Veröffentlichungstag der Anmeldung: 16.08.2000
(73) Patentinhaber: Takata-Petri AG, 63743 Aschaffenburg (DE)
(72) Erfinder: KAMM, Martin, D-13469 Berlin (DE)
(74) Vertreter: Bärmann, Klaus, Dipl.-Ing.
(86) Internationale Anmeldenummer: DE9803211
(87) Internationale Veröffentlichungsnummer: WO9924305

(56) Entgegenhaltungen:
- DE-A- 2 204 628
- DE-A- 2 417 543
- US-A- 4 022 495
- US-A- 4 886 295
- US-A- 5 113 716
- US-A- 5 482 320
- "COMPUTER MONITORED ENERGY ABSORBING STEERING COLUMN" RESEARCH DISCLOSURE, Nr. 35950, 1. März 1994, Seite 164 XP000440550

## Beschreibung

Die Erfindung betrifft eine Insassen-Sicherheitsvorrichtung für die Fahrerseite eines Kraftfahrzeuges nach dem Oberbegriff des Anspruchs 1.

Aus der gattungsbildenden DE 195 01 859 A1 ist eine Sicherheitsanordnung für ein Kraftfahrzeug bekannt, bei dem ein von der Spritzwand entkoppeltes Trägerelement biegesteif an Elementen des Fahrzeugaufbaus angebunden ist, deren Position auch bei einem Unfall nahezu unverändert ist. Die Lenkspindel des Kraftfahrzeuges ist über ein Lager ebenfalls mit dem Trägerelement verbunden. Weiterhin ist die Lenkspindel an einem Lenkrahmengestell gelagert, wobei die Lagerung mit einer gezielt vorgegebenen Nachgiebigkeit ausgeführt ist. Im Crashfall wird die Lenkspindel dadurch nach unten geschwenkt, so daß ein im Lenkrad eingebauter Airbag gegenüber dem Insassen in eine verbesserte Position gebracht wird.

Die Lenkspindel ist teleskopierend ausgeführt und mit einem integrierten Kraftbegrenzer ausgeführt. Weiterhin wird im Crashfall das Fußpedal mittels einer Betätigungsstange vom Insassen wegbewegt.

Der Nachteil dieser Anordnung besteht darin, daß sich im Crashfall die für die Verschiebung der Lenkspindel notwendige, durch den Insassen eingeleitete Kraft nicht der Unfallschwere anpaßt.

Aus der DE OS 24 17 543 ist. eine Sicherheitslenkungsanordnung für Kraftfahrzeuge bekannt, bei der eine bei Zusammenstößen wirksam werdende Stoßenergie aufnehmende Vorrichtung im Lenkungsteil der Lenksäule angeordnet ist. Die Energieaufnahme der Vorrichtung ist mittels Stell- und Steuerglieder beim Fahrzeugaufprall auslösbar und an die jeweilige Anprallgeschwindigkeit anpaßbar.

Der Erfindung liegt die Aufgabe zugrunde, das Deformationsverhalten eines Lenksystems bei einem Fahrzeugcrash so auszulegen, daß es sich von selbst auf die Insassenmasse und die Fahrzeugverzögerung einstellt, wobei die Pedale des Fahrzeugs im Crashfall vom Insassen wegbewegt werden sollen.

Erfindungsgemäß wird das gemäß den Merkmalen des Anspruchs 1 erreicht.

Bei einer Insassen-Sicherheitsvorrichtung für die Fahrerseite eines Kraftfahrzeuges, bei dem die Lenkspindel in einem Mantelrohr geführt ist und bei dem ein Lenkrad mit Airbag vorgesehen ist, wobei die Lenkspindel in Richtung ihrer Längsachse bewegbar angeordnet ist und wobei ihr mindestens ein an die Masse und Relativgeschwindigkeit des auf das Lenkrad oder den Airbag prallenden Insassen selbstadaptierbares Energieabsorptionselement zugeordnet ist, ist das Mantelrohr erfindungsgemäß an mindestens einem Halteteil verschiebbar geführt, das mit einem im Crashfall weitestgehend unverschiebbaren Fahrzeugquerträger verbunden ist. Weiterhin ist das Energieabsorptionselement zwischen dem Mantelrohr und dem Halteteil angeordnet, wobei die Lenkspindel im Mantelrohr unverschiebbar ist und es ist ein Pedaleriehilfsträger vorgesehen, der mit einem Ende schwenkbar am Halteteil befestigt ist, der weiterhin schwenkbar am Mantelrohr befestigt ist und an dessen anderem Ende die Kupplungs-, Brems- und Gaspedale befestigt sind.

Durch die Anordnung eines im Crashfall in Richtung des Insassen weitestgehend unverechiebbaren Halteteils ist gewährleistet, daß sich das in diesem verschiebbar gelagerte Mantelrohr und damit die Lenkspindel vom Insassen weg verschieben, auch'wenn die Spritzwand, die den Fahrgastvom Motorraum trennt, durch den Aufprall in Richtung des Insassen verschoben wird. Dabei wird je nach Stärke des Aufpralls des Insassen mehr oder weniger Energie absorbiert. Durch die Anordnung der Pedale in der angegebenen Weise wird erreicht, daß diese im Crashfall vom Insassen weggeschwenkt werden. Durch diese Maßnahmen ist es möglich, die Verletzungsgefahr für den Insassen weiter herabzusetzen.

Es ist zweckmäßig, daß das mit dem Fahrzeugquerträger verbundene Halteteil mindestens einen Schlitz aufweist, in den ein mit dem Mantelrohr verbundener Führungsbolzen eingreift, und daß als Energieabsorptionselement eine Hydraulikanordnung mit Kolben und Zylinder vorgesehen ist, wobei der Kolben mit dem Mantelrohr oder dem Halteteil und der Zylinder mit dem jeweils anderen Teil verbunden ist.

Vorzugsweise weist das Halteteil zwei sich im wesentlichen in Richtung der Längsachse des Mantelrohres erstreckende Schlitze auf, denen je ein Führungsbolzen zugeordnet ist, wobei jeder Führungsbolzen an einem mit dem Mantelrohr verbundenen Anbindungsteil befestigt ist.

In einer weiteren Ausgestaltung ist vorgesehen, daß das Mantelrohr an seinem dem Insassen zugekehrten Ende mindestens einen Träger für eine Schaltereinheit aufweist. Dieser Träger dient zusätzlich als ein Element, das die Lenkradverformung im Crashfall behindert und damit die Entfaltung des Airbags in Richtung des Fahrzeugdaches anstatt in Richtung des Insassen verhindert.

Der Pedaleriehilfsträger ist zweckmäßig über eine Klemmvorichtung mit dem Mantelrohr verbunden. Durch Lösen dieser Klemmvorrichtung läßt sich die Pedalerie vor Fahrtantritt an den Insassen anpassen. Nach dem Feststellen der Klemmeinrichtung ist der Pedaleriehilfsträger fest mit dem Mantelrohr verbunden, so daß auch bei dieser Ausführungsform die beschriebene vorteilhafte Wirkung im Crashfall eintritt.

Bei der Kolben-Zylinder-Anordnung ist es zweckmäßig, daß der Zylinderraum durch den Kolben in zwei Kammern unterteilt ist, die über mindestens ein Ventil miteinander verbindbar sind. Bevorzugt sind mehrere parallel geschaltete Ventile vorgesehen. In Abhängigkeit von der Insassenmasse und Relativgeschwindigkeit des Insassen wird eine unterschiedliche Anzahl von Ventilen in Arbeitsstellung gebracht. Das wird mittels an sich bekannter Sensoren und einer zugehörigen Steuerung bewirkt.

Anstelle parallel geschalteter Ventile kann auch mindestens ein Ventil mit variablem Querschnitt vorgesehen sein.

Die Erfindung soll in Ausführungsbeipielen anhand von Zeichnungen erläutert werden. Es zeigen:
- Fig. 1: eine Seitenansicht eines Abschnitts der Lenkspindel mit einem in Richtung seiner Längsachse bewegbarem Mantelrohr;
- Fig.2: die Lenkspindel der Fig. 1 nach einem Crash;
- Fig. 3: eine Seitenansicht, teilweise geschnitten, einer in einem unbeweglichen Mantelrohr in Richtung ihrer Längsachse beweglichen. Lenkspindel zur Veranschaulichung der Wirkungsweise der Hydraulikanordnung.

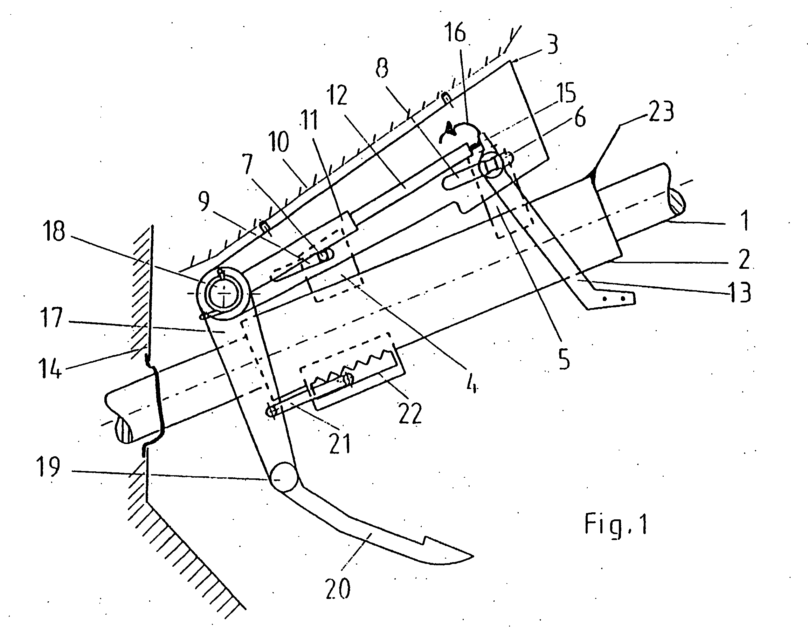

Im Ausführungsbeispiel der Fig. 1 ist eine Lenkspindel 1 in einem Mantelrohr 2 drehbar aber in axialer Richtung unbeweglich gelagert. Das Mantelrohr 2 ist in Richtung seiner Längsachse an einem Halteteil 3 bewegbar geführt. Hierzu sind am Mantelrohr 2 zwei Anbindungsteile 4, 5 befestigt, z.B. angeschweißt, die je einen Führungsbolzen 6, 7 aufweisen. Je ein Führungsbolzen greift in einen Schlitz 8, 9 im Halteteil 3. Das Halteteil 3 ist an einem Querträger 10 des Kraftfahrzeuges befestigt, der bei einem Crash weitestgehend seine Lage beibehält, so daß auch das Halteteil 3 lagestabil ist. Die Lagerung der Lenkspindel in der Spritzwand 14 erübrigt sich dadurch, so daß die Lenkanlage in ihrem Crashverhalten weitgehend unabhängig von der Spritzwanddeformation ist.

Zwischen dem Halteteil 3 und dem Mantelrohr 2 ist ein Energieabsorptionselement in Form einer Kolben-Zylinder-Anordnung vorgesehen. Dabei ist ein Zylinder 11 mit dem Halteteil 3 und ein Kolben 12 mit dem Führungsbolzen 6 verbunden. Diese Kolben-Zylinder-Anordnung kann außer zur Energieabsorption im Crashfall auch zur Einstellung der Lenkspindel genutzt werden. Zur Längsverstellung der Lenkspindel und damit Einstellung auf die jeweilige Fahrergröße ist ein Hebel 13 vorgesehen, der um den Führungsbolzen 6 schwenkbar ist. Zur Längsverstellung wird mittels des Oberteils 15 des Hebels 13 ein nicht dargestelltes Ventil betätigt. Durch Öffnen des Ventils kann Hydraulikflüssigkeit über eine Leitung 16 in ein nicht dargestelltes Gefäß fließen, so daß sich der Kolben im Zylinder leicht verschieben läßt. Nach dem Schließen des Ventils ist die Funktion der Kolben-Zylinder-Anordnung als Energieabsorptionselement wieder hergestellt. Bei der Verschiebung des Mantelrohres zur Längsverstellung der Lenkspindel werden die Führungsbolzen 6, 7 in den Schlitzen 8, 9 nur um einen Betrag verschoben, der wesentlich geringer als die Gesamtlänge der Schlitze ist. Für die Verschiebung der Führungsbolzen bei einem Crash steht deshalb noch ein ausreichender Verschiebeweg in den Schlitzen zur Verfügung.

Die gesamte Pedalerie des Kraftfahrzeuges ist über einen Hilfsträger 17 ebenfalls mit dem Halteteil 3 verbunden, indem das obere Ende 18 schwenkbar am Halteteil 3 befestigt ist. Am unteren Ende 19 des Hilfsträgers sind die Pedale, von denen nur eine Pedale 20 erkennbar ist, schwenkbar angeordnet. In seinem mittleren Abschnitt ist der Hilfsträger 17 über einen Hebel 21 und eine Klemmung 22 mit dem Mantelrohr 2 verbunden. Durch Lösen der Klemmung 22 kann die gesamte Pedalerie geschwenkt und nach Fahrerwunsch eingestellt werden. Wenn die Klemmung fixiert ist, ist der Hilfsträger 17 fest mit dem Mantelrohr 2 verbunden.

Am oberen Ende des Mantelrohres 2 ist ein Träger 23 für eine Schaltereinheit befestigt. Dieser Träger soll zusätzlich die Lenkradverformung im oberen Lenkradkranzbereich behindern, um so ein crashoptimiertes Deformationsverhalten des Lenkrades über den gesamten Lenkwinkelbereich zu erzielen.

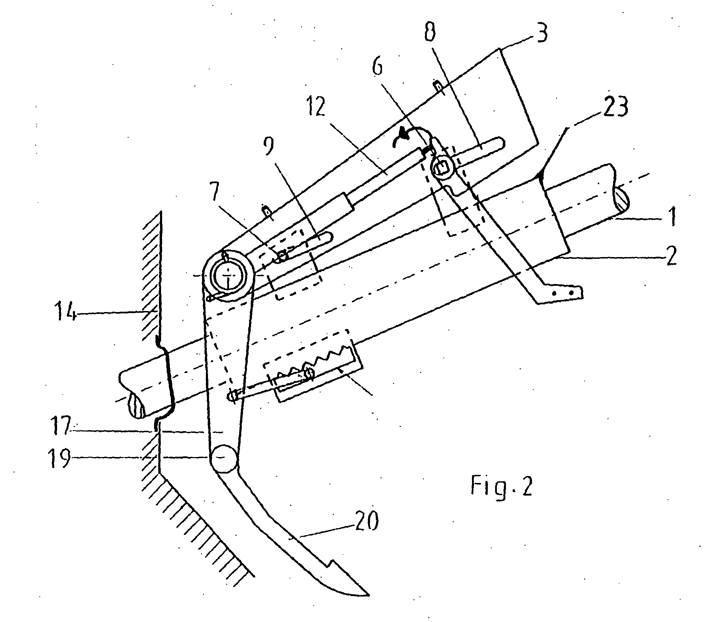

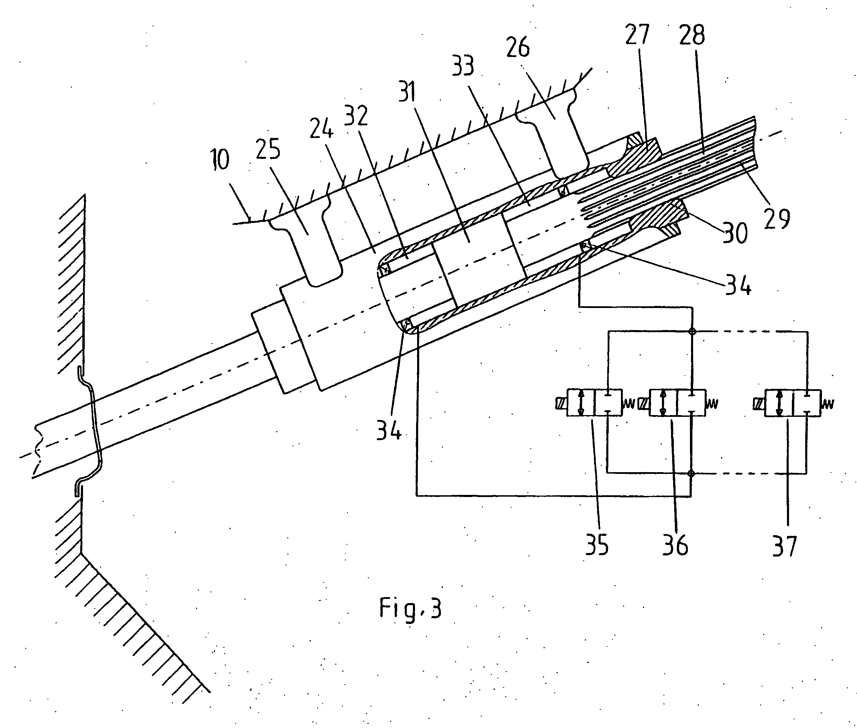

Während die Fig. 1 die Normallage der Lenkspindel und der Pedalerie zeigt, ist in der Fig. 2 deren Lage nach einem Crash dargestellt. Dort ist das Mantelrohr 2 in Richtung der Spritzwand 14, d.h. in der Figur nach links, verschoben und die Führungsbolzen 6, 7 liegen am linken Ende der Schlitze 8, 9 an. Diese Verschiebung des Mantelrohrs 2 mit der Lenkspindel 1 wird durch den Aufprall des Insassen auf das Lenkrad oder auf den Airbag verursacht. Durch diesen Aufprall wird über das Mantelrohr Druck auf den Kolben 12 ausgeübt. Ab einem bestimmten Kraftniveau wird mindestens ein Ventil (nicht dargestellt) geöffnet, so daß Energie abgebaut wird. Eine weitere Ventilanordnung wird später anhand der Fig. 3 erläutert.

Infolge der Verschiebung des Mantelrohres 2 wird auch das untere Ende 19 des unverschiebbar mit diesem verbundenen Pedaleriehilfsträgers 17 zusammen mit der gesamten Pedalerie vom Fahrer weg in Richtung der Spritzwand 14 verschoben, wie es ebenfalls aus der Fig. 2 ersichtlich ist.

In der Figur 3, die lediglich der Erläuterung der Hydraulikanordnung dient, ist ein Mantelrohr 24 vorgesehen, daß über Verbindungsteile 25, 26 fest mit dem Querträger 10 verbunden ist. Im Mantelrohr 24 ist eine Lenksäule gelagert, die aus zwei Teilen besteht, wobei diese Teile eine Kolben-Zylinder-Anordnung bilden. So ist ein Teil als Buchse 27'ausgebildet, die drehbar im Mantelrohr 24 gelagert ist. Durch diese Buche 27 hindurch verläuft die Lenkspindel 28, die axial verschiebbar in der Buchse 27 gelagert ist. Das am Lenkrad aufgebrachte Drehmoment wird durch eine Kerbverzahnung 29 am Umfang der Lenkspindel 28 und eine entsprechende Kerbverzahnung 30 in der Buchse 27 auf diese übertragen.

Der Innendurchmesser der Buchse 27 ist in deren mittlerem Bereich größer als der Durchmesser der Lenkspindel 28. Dieser Zwischenraum wird durch einen auf der Lenkspindel vorgesehenen Kolben 31 in zwei Kammern 32, 33 unterteilt, die durch Dichtungselemente 34 nach außen abgedichtet sind. Beide Kammern sind über parallel geschaltete Ventile 35, 36, 37 miteinander verbunden.

In den Kammern 32, 33 und in den sie verbindenden Leitungen befindet sich ein abgeschlossenes Volumen eines geeigneten Mediums, vorzugsweise einer Flüssigkeit. In der dargestellten Grundstellung ist die Verbindung zwischen den Kammern 32, 33 unterbrochen, d.h. die axiale Verschiebbarkeit der Lenkspindel 28 und damit des nicht dargestellten Lenkrades ist gesperrt. Für eine Lenksäulenverstellung werden alle Ventile in ihre Arbeitsstellung gebracht, in der sie einen vorbestimmten Durchströmquerschnitt aufweisen. Damit ist eine axiale Verschiebung mit geringem Kraftaufwand möglich, indem das Medium aus der Kammer 32 in die Kammer 33 bzw. umgekehrt gedrückt wird.

Im Crashfall sorgt die Kolben-Zylinder-Anordnung der Lenksäule als Energieabsorptionselement für den Energieabbau eines direkt oder indirekt über einen entfalteten Gassack auf das Lenkrad aufprallenden Insassen. Das Ventilsystem ermöglicht dabei die selbständige Anpassung des Dämpfungsverhaltens an die Unfallschwere. Dazu werden in Abhängigkeit von der Masse und der Relativgeschwindigkeit des Insassen eine unterschiedliche Anzahl der Ventile 35, 36, 37 in ihre Arbeitstellung gebracht und damit der Durchströmquerschnitt variiert. Eine Verdrängung des Mediums von der Kammer 32 zur Kammer 33 ist damit auf einem unterschiedlichen Kraftniveau möglich. Die Stellung der nötigen Anzahl von Ventilen erfolgt mittels nicht dargestellter Sensoren und einer zugeordneten an sich bekannten Steuerschaltung.

Die beschriebene Ventilanordnung kann auch zur Steuerung der Kolben-Zylinder-Anordnung der Fig. 1 verwendet werden.

## Patentansprüche

1. Insassen-Sicherheitsvorrichtung für die Fahrerseite eines Kraftfahrzeuges, bei dem die Lenkspindel (1) in einem Mantelrohr (2) geführt ist und bei dem ein Lenkrad'mit Airbag vorgesehen ist, wobei die Lenkspindel (1) in Richtung ihrer Längsachse bewegbar angeordnet ist und wobei ihr mindestens ein an die Masse und Relativgeschwindigkeit des auf das Lenkrad oder den Airbag prallenden Insassen selbstadaptierbares Energieabsorptionselement (11, 12; 31, 32, 33) zugeordnet ist,
**dadurch gekennzeichnet,**
**daß** das Mantelrohr (2) an mindestens einem Halteteil (3) verschiebbar geführt ist, das mit einem im Crashfall weitestgehend unverschiebbaren Fahrzeugquerträger (10) verbunden ist, daß das Energieabsorptionselement (11, 12) zwischen dem Mantelrohr (2) und dem Halteteil (3) angeordnet ist, wobei die Lenkspindel (1) im Mantelrohr (2) unverschiebbar ist, und daß ein Pedaleriehilfsträger (17) vorgesehen ist, der mit einem Ende (18) schwenkbar am Halteteil (3) befestigt ist, der weiterhin schwenkbar am Mantelrohr (2) befestigt ist und an dessen anderem Ende (19) die Kupplungs-, Brems- und Gaspedale (20) befestigt sind.

2. Insassen-Sicherheitsvorrichtung nach Anspruch 1 **dadurch gekennzeichnet, daß** das mit dem Fahrzeugquerträger (10) verbundene Halteteil (3) mindestens einen Schlitz (8, 9) aufweist, in den ein mit dem Mantelrohr (2) verbundener Führungsbolzen (6, 7) eingreift, und daß als Energieabsorptionselement eine Hydraulikanordnung mit Kolben (12) und Zylinder (11) vorgesehen ist, wobei der Kolben (12) mit dem Mantelrohr (2) oder dem Halteteil (3) und der Zylinder (11) mit dem jeweils anderen Teil verbunden ist.

3. Insassen-Sicherheitsvorrichtung nach Anspruch 1 oder 2, **dadurch gekennzeichnet, daß** das Halteteil (3) zwei sich im wesentlichen in Richtung der Längsachse des Mantelrohres (2) erstreckende Schlitze (8, 9) aufweist, denen je ein Führungsbolzen (6, 7) zugeordnet ist, wobei jeder Führungsbolzen an einem mit dem Mantelrohr verbundenen Anbindungsteil (4, 5) befestigt ist.

4. Insassen-Sicherheitsvorrichtung nach mindestens einem der vorhergehenden Ansprüche, **dadurch gekennzeichnet, daß** das Mantelrohr (2) an seinem dem Insassen zugekehrten Ende mindestens einen Träger (23) für eine Schaltereinheit aufweist.

5. Insassen-Sicherheitsvorrichtung nach mindestens einem der vorhergehenden Ansprüche, **dadurch gekennzeichnet, daß** der Pedaleriehilfsträger (17) über eine Klemmvorichtung (22) mit dem Mantelrohr (2) verbunden ist.

6. Insassen-Sicherheitsvorrichtung nach mindestens einem der vorhergehenden Ansprüche, **dadurch gekennzeichnet, daß** der Zylinderraum durch den Kolben in zwei Kammern (32, 33) unterteilt ist, die über mindestens ein Ventil (35, 36, 37) miteinander verbindbar sind.

7. Insassen-Sicherungsvorrichtung nach Anspruch 6, **dadurch gekennzeichnet, daß** mehrere parallel geschaltete Ventile (35, 36, 37) vorgesehen sind.

8. Insassen-Sicherungsvorrichtung nach Anspruch 6 oder 7, **dadurch gekennzeichnet, daß** in Abhängigkeit von der Insassenmasse und Relativgeschwindigkeit des Insassen der Durchfluß durch eine unterschiedliche Anzahl von Ventilen (35, 36, 37) freigegeben ist, die durch Sensoren und eine zugehörigen Steuerung betätigbar sind.

9. Insassen-Sicherungsvorrichtung nach mindestens einem der Ansprüche 6 bis 8, **dadurch gekennzeichnet, daß** mindestens ein Ventil mit variablem Querschnitt vorgesehen ist.

## Claims

1. Occupant safety device for the driver's side of a motor vehicle, in which the steering spindle (1) is guided in a steering-column tube (2) and in which a steering wheel is provided with an airbag, the steering spindle (1) being arranged in a manner such that it can move in the direction of its longitudinal axis, and the steering spindle being assigned at least one energy absorption element (11, 12; 31., 32, 33) which can automatically adapt to the mass and relative speed of the occupant impacting against the steering wheel or the airbag, **characterized in that** the steering-column tube (2) is guided displaceably on at least one retaining part (3) which is connected to a vehicle cross member (10), which is non displaceable to the greatest possible extent in the event of a crash, **in that** the energy absorption element (11, 12) is arranged between the steering-column tube (2) and the retaining part (3), the steering column (1) being non-displaceable in the steering-column tube (2), and **in that** an auxiliary support (17) for the pedals is provided, which support is fastened pivotably at one end (18) to the retaining part (3), is furthermore fastened pivotably to the steering-column tube (2) and at the other end (19) of which the clutch, brake and accelerator pedals (20) are fastened.

2. Occupant safety device according to claim 1, **characterized in that** the retaining part (3) which is connected to the vehicle cross member (10) has at least one slot (8, 9), in which a guide bolt (6, 7) connected to the steering-column tube (2) engages, and **in that** a hydraulic arrangement having a piston (12) and cylinder (11) is provided as the energy absorption element, the piston (12) being connected to the steering-column tube (2) or the retaining part (3) and the cylinder (11) being connected to the other part in each case.

3. Occupant safety device according to claim 1 or 2, **characterized in that** the retaining part (3) has slots (8, 9), which extend essentially in the direction of the longitudinal axis of the steering-column tube (2) and which are each assigned a guide bolt (6, 7), each guide bolt being fastened to a connecting part (4, 5) connected to the steering-column tube.

4. Occupant safety device according to at least one of the preceding claims, **characterized in that** the steering-column tube (2) has, at its end facing the occupant, at least one support (23) for a switch unit.

5. Occupant safety device according to at least one of the preceding claims, **characterized in that** the auxiliary support (17) for the pedals is connected to the steering-column tube (2) via a clamping device (22).

6. Occupant safety device according to at least one of the preceding claims, **characterized in that** the cylinder space is divided by the piston into two chambers (32, 33) which can be connected to each other via at least one valve (35, 36, 37).

7. Occupant safety device according to claim 6, **characterized in that** a plurality of valves (35, 36, 37) connected in parallel are provided.

8. Occupant safety device according to claim 6 or 7, **characterized in that** the flow through a different number of valves (35, 36, 37), which can be actuated by sensors and an associated control system, is enabled as a function of the mass of the occupant and relative speed of the occupant.

9. Occupant safety device according to at least one of claims 6 to 8, **characterized in that** at least one valve having a variable cross section is provided.

## Revendications

1. Dispositif de sécurité pour occupant sur le côté conducteur d'un véhicule automobile, dans lequel l'arbre de direction (1) est guidé dans un tube enveloppe (2) et dans lequel il est prévu un volant avec airbag, l'arbre de direction (1) étant agencé mobile en direction de son axe longitudinal, et au moins un élément d'absorption d'énergie (11, 12 ; 31, 32, 33), autoadaptable à la masse et à la vitesse relative de l'occupant percutant le volant ou l'airbag, étant associé audit arbre de direction,
**caractérisé en ce que**
le tube enveloppe (2) est guidé à déplacement sur au moins une partie de retenue (3) qui est reliée à une traverse de véhicule (10) pratiquement indéplaçable en cas de collision, **en ce que** l'élément d'absorption d'énergie (11, 12) est agencé entre le tube enveloppe (2) et la partie de retenue (3), l'arbre de direction (1) est indéplaçable dans le tube enveloppe (2), et **en ce qu'**il est prévu un support auxiliaire de pédales (17) qui est fixé avec une extrémité (18) sur la partie de retenue (3) de manière à pivoter, qui est par ailleurs fixé de manière à pivoter sur le tube enveloppe (2) et à l'autre extrémité (19) duquel sont fixées les pédales d'embrayage, de frein et d'accélérateur (20).

2. Dispositif de sécurité pour occupant selon la revendication 1, **caractérisé en ce que** la partie de retenue (3) reliée à la traverse de véhicule (10) présente au moins une fente (8, 9) dans laquelle s'engage un goujon de guidage (6, 7) relié au tube enveloppe (2), et **en ce qu'**il est prévu en tant qu'élément d'absorption d'énergie un agencement hydraulique avec piston (12) et cylindre (11), le piston (12) étant relié au tube enveloppe (2) ou à la partie de retenue (3) et le cylindre étant relié avec l'autre partie respective.

3. Dispositif de sécurité pour occupant selon l'une ou l'autre des revendications 1 et 2, **caractérisé en ce que** la partie de retenue (3) présente deux fentes (8, 9) s'étendant sensiblement en direction de l'axe longitudinal du tube enveloppe (2), auxquelles est associé un goujon de guidage (6, 7) respectif, chaque goujon de guidage étant fixé à une partie de rattachement (4, 5) reliée au tube enveloppe.

4. Dispositif de sécurité pour occupant selon au moins une quelconque des revendications précédentes, **caractérisé en ce que** le tube enveloppe (2) présente à son extrémité tournée vers l'occupant au moins un support (23) pour une unité de commutateurs.

5. Dispositif de sécurité pour occupant selon au moins une quelconque des revendications précédentes, **caractérisé en ce que** le support auxiliaire de pédales (17) est relié au tube enveloppe (2) par un dispositif de serrage (22).

6. Dispositif de sécurité pour occupant selon au moins une quelconque des revendications précédentes, **caractérisé en ce que** la chambre cylindrique est subdivisée par le piston en deux chambres (32, 33) qui peuvent être reliées l'une à l'autre par au moins une soupape (35, 36, 37).

7. Dispositif de sécurité pour occupant selon la revendication 6, **caractérisé en ce qu'**il est prévu plusieurs soupapes (35, 36, 37) branchées en parallèle.

8. Dispositif de sécurité pour occupant selon l'une ou l'autre des revendications 6 et 7, **caractérisé en ce qu'**en fonction de la masse et de la vitesse relative de l'occupant, l'écoulement est libéré par un nombre différent de soupapes (35, 36, 37) qui sont actionnables par des capteurs et par une commande associée.

9. Dispositif de sécurité pour occupant selon au moins une des revendications 6 à 8, **caractérisé en ce qu'**il est prévu au moins une soupape à section transversale variable.
